# EUROPÄISCHE PATENTSCHRIFT

(11) **EP 2 178 953 B1**
(45) Veröffentlichungstag und Bekanntmachung des Hinweises auf die Patenterteilung: **23.07.2014**
(21) Anmeldenummer: 08787039.0
(22) Anmeldetag: 08.08.2008
(51) Int. Cl.: C08J 9/224

(54) **BESCHICHTUNGSZUSAMMENSETZUNG FÜR EXPANDIERBARE STYROLPOLYMERISATPARTIKEL**
COATING COMPOUND FOR EXPANDABLE STYROL POLYMER PARTICLES
COMPOSITION DE REVÊTEMENT POUR PARTICULE POLYMÈRE DE STYRÈNE EXPANSIBLE

(30) Priorität: 09.08.2007 EP 07114072
(43) Veröffentlichungstag der Anmeldung: 28.04.2010
(73) Patentinhaber: BASF SE, 67056 Ludwigshafen (DE)
(72) Erfinder: KELLER, Andreas, 67459 Böhl-Iggelheim (DE); KRIHA, Olaf, 67063 Ludwigshafen (DE); HUSEMANN, Wolfram, 67435 Neustadt (DE); HAHN, Klaus, 67281 Kirchheim (DE); SCHMIED, Bernhard, 67227 Frankenthal (DE); RIETHUES, Michael, 67071 Ludwigshafen (DE)
(86) Internationale Anmeldenummer: PCT/EP2008/060444
(87) Internationale Veröffentlichungsnummer: WO 2009/019310

(56) Entgegenhaltungen:
- EP-A- 0 470 455
- EP-A- 0 485 309
- GB-A- 1 581 237

## Beschreibung

Die Erfindung betrifft Beschichtungszusammensetzung für expandierbare Styrolpolymerisatpartikel.

Um die störungsfreie Förderung von expandierbarem Polystyrol (EPS) zu ermöglichen und die elektrostatische Aufladung der vorgeschäumten Polystyrolschaumpartikel zu vermindern, wird in der Regel eine Beschichtung der EPS-Partikel mit einem Antistatikum verwendet. Abrieb oder Abwaschung des Beschichtungsmittels von der Oberfläche der Partikel führt häufig zu nicht zufriedenstellenden antistatischen Eigenschaften. Des weiteren kann die Beschichtung mit dem Antistatikum zur Verklebung der Partikel und schlechtem Rieselverhalten führen.

Die EP-A 470 455 beschreibt perlförmige antistatische expandierbare Styrolpolymerisate mit einer Beschichtung aus einem quarternären Ammoniumsalz und feinteiliger Kieselsäure, die sich durch ein gutes Rieselverhalten auszeichnen.

Die DE 195 41 725 C1 beschreibt expandierbare Styrol-Perlpolymeriste mit verminderter Wasseraufnahmefähigkeit, die mit einer Beschichtung versehen sind, die neben Glycerintristearat, Zinkstearat, und Glycerinmonostearat 5 bis 50 Gew.-%, bezogen auf das Gewicht der Beschichtung, eines hydrophoben Silikates enthält.

Die DE 195 30 548 A1 beschreibt expandierbare Styrol-Perlpolymeriste mit verminderter Wasseraufnahmefähigkeit, die mit einer Beschichtung versehen sind, die neben 10 bis 90 Gew.-%, bezogen auf das Gewicht der Beschichtung, Kokosfett oder Parafinöl vorteilhaft noch ein Antiverklebungsmittel auf Basis eines hydrophoben Silikates enthält.

GB 1,581,237 beschreibt unter anderem die Verwendung von Rizinuswachs (hydriertes Rizinusöl, HCO) als Beschichtungsmittel für expandierbares Polystyrol, um die Entformbarkeit und die Qualität der Schaumstoffformteile nach dem Versintern der vorgeschäumten EPS-Partikel zu verbessern.

Mit den beschriebenen Beschichtungsmittelzusammensetzungen lassen sich in der Regel gute mechanische Eigenschaften, insbesondere Biege- und Druckfestigkeiten nur erreichen, wenn bei der Block- bzw. Schaumstoffherstellung deutlich längere Entformzeiten, insbesondere längere Druckabbauzeiten in Kauf genommen werden. Aufgabe der vorliegenden Erfindung war es daher den genannten Nachteilen abzuhelfen und eine Beschichtungsmittelzusammensetzung für expandierbare Styrolpolymerisatpartikel zu finden, die beim Vorschäumen eine verringerte Neigung zum Verkleben der Partikel zeigt und eine schnelle Verarbeitung der vorgeschäumten Partikel bei geringer statischer Aufladung zu Schaumstoffformteilen mit guten mechanischen Eigenschaften ermöglicht.

Demgemäß wurde eine Beschichtungsmittelzusammensetzung für expandierbare Styrolpolymerisatpartikel gefunden, welche
(A) 10 bis 90 Gew.-% eines Tristearylesters mit einem Schmelzpunkt im Bereich von 60 bis 65°C,
(B) 10 bis 90 Gew.-% eines Tricglycerides einer Hydroxy-C₁₆ bis C₁₈-Ölsäure mit einem Schmelzpunkt im Bereich von 70 bis 95°C enthält.

Die Beschichtung kann weitere Antistatika und/oder Beschichtungshilfsstoffe enthalten oder auf weiteren Beschichtungen mit anderen Beschichtungsmitteln aufgebracht werden.

Eine bevorzugte Beschichtungsmittelzusammensetzung für expandierbare Styrolpolymerisatpartikel besteht im wesentlichen aus
(A) 20 bis 80 Gew.-% eines Tristearylesters mit einem Schmelzpunkt im Bereich von 60 bis 65°C,
(B) 15 bis 60 Gew.-%, insbesondere 20 bis 45 Gew.-% eines Tricglycerides einer Hydroxy-C₁₆ bis C₁₈-Ölsäure mit einem Schmelzpunkt im Bereich von 70 bis 95°C,
(C) 5 bis 30 Gew.-% eines hydrophilen oder hydrophoben Silikates oder Zinkstearat
(D) 0 bis 40 Gew.-%, insbesondere 10 bis 50 Gew.-% eines Glycerinmonoesters einer C₁₆ bis C₁₈-Fettsäure,
(E) 0 bis 10 Gew.-% eines quaternäre Ammoniumsalzes, Sulfoniumsalzes oder Ethylenbisstearyldiamides, wobei die Summe der Komponenten (A) bis (E) 100 Gew.-% ergibt..

Bei den Komponenten (A) und (B) handelt es sich um Naturprodukte, die üblicherweise in untergeordneten Mengen Verunreinigungen enthalten und insbesondere noch Mono-, Di- und Triglyceride anderer Säuren enthalten können.

Bevorzugt enthält die Beschichtungsmittelzusammensetzung als Tristearylester (A) Glycerintristearat (GTS) oder Zitronensäure-tristearylester (CTS).

Als Tricglycerid einer Hydroxy-C₁₆ bis C₁₈-Ölsäure (B) werden bevorzugt Triglyceride von Monohydroxy-C₁₆ bis C₁₈-Alkansäuren, insbesondere hydriertes Rizinusöl (HCO, Rizinuswachs) eingesetzt.

Als Glycerinmonoester einer C₁₆ bis C₁₈-Fettsäure (D) wird bevorzugt Glycerinmonostearat (GMS) eingesetzt.

Des weiteren betrifft die Erfindung expandierbare Styrolpolymerisatpartikel, welche mindestens eine Beschichtung aus den oben beschriebenen Beschichtungsmittelzusammensetzungen aufweist.

Bevorzugte expandierbare Styrolpolymerisatpartikel, weisen
(I) eine erste Beschichtung aus 0,1 bis 2 Gew.-%, bezogen auf das expandierbare Styrolpolymerisat, mindestens einer Verbindung aus der Gruppe, enthaltend Glycerinmonostearat, Glycerindistearat, Zinkstearat, quaternäre Ammoniumsalze, Sulfoniumsalze und Ethylenbisdiaminde, und
(II) eine zweite Beschichtung aus 0,1 bis 2 Gew.-%, bezogen auf das expandierbare Styrolpolymerisat, einer der oben beschriebenen, erfindungsgemäßen Beschichtungszusammensetzung auf.

Die Beschichtungen können auch in einem Beschichtungsschritt auf das Rohmaterial aufgebracht werden.

Die expandierbaren Styrolpolymerisat-Partikel bestehen bevorzugt aus treibmittelhaltigen Styrolpolymeren, wie Polystyrol (PS), Styrolcopolymere wie Styrol-Acrylnitril (SAN) Styrol-Butadien-Blockcopolymeren oder Mischungen davon.

Expandierbare Styrolpolymerisat-Partikel sind solche, die durch z. B. mit Heißluft oder Wasserdampf zu expandierten, Styrolpolymerisat-Partikeln verschäumbar sind. Sie enthalten in der Regel chemische oder physikalische Treibmittel in Mengen von 2 bis 10 Gew.-%, bevorzugt 3 bis 7 Gew.-% bezogen auf das Styrolpolymerisat.

Bevorzugte physikalische Treibmittel sind Gase, wie Stickstoff oder Kohlendioxid oder aliphatische Kohlenwasserstoffe mit 2 bis 7 Kohlenstoffatomen, Alkohole, Ketone, Ether oder halogenierte Kohlenwasserstoffe. Besonders bevorzugt werden iso-Butan, n-Butan, iso-Pentan, n-Pentan, neo-Pentan, Hexan oder Gemische davon eingesetzt.

Des weiteren können die expandierbaren Styrolpolymerisat-Partikel übliche Hilfsstoffe, wie Farbstoffe, Pigmente, Füllstoffe, IR-Absorber, wie Ruß, Aluminium oder Graphit, Stabilisatoren, Flammschutzmittel, wie Hexabromcyclododecan (HBCD), Flammschutzsynergisten, wie Dicumyl oder Dicumylperoxid, Keimbildner oder Gleitmittel in wirksamen Mengen enthalten.

Die erfindungsgemäßen, expandierbaren Styrolpolymerisat-Partikel können je nach Herstellverfahren kugel- bzw. perlförmig oder zylinderförmig sein und weisen in der Regel einen mittleren Teilchendurchmesser im Bereich von 0,05 bis 5 mm, insbesondere 0,3 bis 2,5 mm auf, die gegebenenfalls durch Siebung in einzelne Fraktionen aufgeteilt werden können.

Die expandierten Styrolpolymerisat-Partikel haben entsprechend dem Expansionsgrad mittlere Teilchendurchmesser im Bereich von 1 bis 10 mm, insbesondere 2 bis 6 mm und eine Dichte im Bereich von 10 bis 200 kg/m³.

Die expandierbaren Styrolpolymerisat-Partikel können beispielsweise durch Druckimprägnierung von thermoplastischen Polymer-Partikeln mit Treibmitteln in einem Kessel, durch Suspensionspolymerisation in Gegenwart von Treibmitteln oder durch Schmelzeimprägnierung in einem Extruder oder statischen Mischer und anschließende Druckunterwassergranulierung erhalten werden.

Expandierte Styrolpolymerisatpartikel können durch Verschäumen von expandierbaren Styrolpolymerisat-Partikeln, z B. mit Heißluft oder Wasserdampf in Druckvorschäumern, durch Druckimprägnierung von Styrolpolymerisat-Partikeln mit Treibmitteln in einem Kessel und anschließendem Entspannen oder durch Schmelzeextrusion einer treibmittelhaltigen Schmelze unter Aufschäumen und anschließender Granulierung erhalten werden. In der Regel lassen sich die mit der erfindungsgemäßen Beschichtungszusammensetzung beschichteten expandierbaren Styrolpolymerisate im Vergleich zu herkömmlichen Beschichtungen unter vergleichbaren Vorschäumbedingungen zu niedrigeren Schüttdichten verschäumen. Die Schüttdichten bei einmaligem Vorschäumen liegen in der Regel im Bereich von 10 bis 20 kg/m³, vorzugsweise im Bereich von 15 bis 18 kg/m³

Die Beschichtung der expandierbaren oder expandierten, Styrolpolymerisat-Partikel kann vor oder nach dem Verschäumen, beispielsweise durch Auftrommeln der erfindungsgemäßen Beschichtungszusammensetzung in einem Schaufelmischer (Fa. Lödige) oder durch in Kontaktbringen der Oberfläche der Styrolpolymerisatpartikel mit einer Lösung, beispielsweise durch Tauchen oder Sprühen, erfolgen. Bei der Herstellung durch Extrusion einer treibmittelhaltigen Schmelze kann die Beschichtungsmittelzusammensetzung auch dem Wasserkreislauf des Unterwassergranulators in Form einer wässrigen Lösung oder wässrigen Suspension zugegeben werden.

Die erfindungsgemäßen expandierbaren Styrolpolymerpartikel sind antistatisch ausgerüstet, zeigen eine geringe Neigung zur Verklebung beim Vorschäumen, jedoch eine gute Verschweißung beim Verschäumen zu Formteilen. Dabei lassen sich beim Versintern der vorgeschäumten Partikel Schaumstoffformkörpern mit hoher Druck- und Biegefestigkeit sehr kurze Druckabbauzeiten realisieren. Im Vergleich zu herkömmlichen Beschichtungen lassen sich somit gewünschte Biegefestigkeiten für die Formteile bei kürzeren Entformzeiten erreichen. Die Formteile weisen aufgrund der guten Verschweißung auch in großen Formteilen eine homogene Druck- und Biegefestigkeit in den Rand- und Außenbereichen und eine sichtbar glattere Oberfläche auf.

### Beispiele:

### Beispiele 1 bis 4:

### Beschichtungsmittelzusammensetzung:

Hydriertes Rizinusöl (HCO, Smp. = 87°C, (castor Wax NF, Firma CasChem)) wurde zusammen mit Hilfe von Trockeneis zu Pulver vermahlen. Das gemahlene hydrierte Rizinusöl wurde mit Silikat (SIPERNAT FK320®), Glycerinmonostearat (GMS, GMSR, Fa. Danisco) und Glycerintristearat (GTS, Tegin BI159V Fa. Goldschmitt) zu einem einheitlichen Pulver entsprechend den in Tabelle 1 angegebenen Mischungsverhältnissen vermischt.

Die Beschichtungen wurden im Lödige Mischer (2,5 kg) auf die mit Antistatikum 743 (Fa. BASF SE) (150 ppm, erste Beschichtung) vorbeschichtete expandierbare Polystyrol-Perlen (Styropor® F215 der BASF Aktiengesellschaft) aufgebracht. Die Menge des Beschichtungsmittels (2. Beschichtung), bezogen auf die beschichtete, expandierbare Polystyrol-Perle, ist ebenfalls in Tabelle 2 angegeben.

Die beschichteten EPS-Perlen wurden im Vorschäumer vorgeschäumt und in einer Form zu Blöcken mit einer Dichte von 17 bzw. 24 g/l versintert.

Die Druckfestigkeit wurde bei 10 % Stauchung nach EN 826, die Biegefestigkeit nach EN12039 Methode B bestimmt.

### Vergleichsversuche V1 und V2:

Es wurde analog Beispiel 1 und 2 vorgegangen, wobei anstelle von Hydriertem Rizinusöl Glycerinmonostearat (GMS) eingesetzt wurde.

**Tabelle 1:**

| Beschichtungsmittelzusammensetzung | Beisp. 1 | Beisp. 2 | Beisp. 3 | Beisp. 4 | Vergleichsversuche | |
|---|---|---|---|---|---|---|
| | | | | | V1 | V2 |
| GTS [Gew.-%] | 40 | 40 | 20 | 20 | 40 | 40 |
| HCO [Gew.-%] | 45 | 45 | 45 | 45 | 0 | 0 |
| Silikat [Gew.-%] | 15 | 15 | 15 | 15 | 10 | 10 |
| GMS [Gew.-%] | 0 | 0 | 20 | 20 | 50 | 50 |
| Beschichtungsmittelmenge [Gew.-%] | 0,4 | 0,4 | 0,3 | 0,3 | 0,45 | 0,45 |
| | | | | | | |
| Formteil | | | | | | |
| Bedampfungsdruck [bar] | 0,6 | 0,7 | 0,6 | 0,7 | 0,6 | 0,7 |
| Dichte [g/l] | 15,9 | 15,7 | 16,4 | 17,1 | 15,1 | 15,8 |
| Druckfestigkeit [kPa] | 90,7 | 90,1 | 93,7 | 96,8 | 88,4 | 91,6 |
| Biegefestigkeit [kPa] | 175 | 186 | 158,5 | 176,6 | 142,2 | 171,8 |
| Entformzeit [sec] | 43 | 143,5 | 33,0 | 130 | 45,5 | 172,5 |

### Beispiele 5 bis 8

### Beschichtungsmittelzusammensetzung:

Hydriertes Rizinusöl (HCO, Smp. = 87°C, (HCO Powder, Firma Jayant Oil and derivatives Ltd.) wurde mit Silikat (SIPERNAT FK320®), Glycerinmonostearat (GMS, GMSR, Fa. Danisco) und Glycerintristearat (GTS, Tegin BI159V Fa. Goldschmitt) sowie Zinkstearat zu einem einheitlichen Pulver entsprechend den in Tabelle 2 angegebenen Mischungsverhältnissen vermischt.

Die Beschichtungen wurden im Lödige Mischer (2,5 kg) auf die mit Antistatikum 743 (Fa. BASF SE) (150 ppm) vorbeschichtete expandierbare Polystyrol-Perlen (Neopor® X5300 der BASF SE) aufgebracht. Die Menge des Beschichtungsmittels, bezogen auf die beschichtete, expandierbare Polystyrol-Perle, ist ebenfalls in Tabelle 2 angegeben.

Die beschichteten EPS-Perlen wurden im Vorschäumer vorgeschäumt und in einer Form zu Blöcken mit einer Dichte von 17 g/l versintert.

Die Druckfestigkeit wurde bei 10 % Stauchung nach EN 826, die Biegefestigkeit nach EN12039 Methode B bestimmt.

### Vergleichsversuche V3 und V4:

Hier wurden übliche Beschichtungen ohne hydriertes Rizinusöl eingesetzt.

**Tabelle 2:**

| Beschichtungsmittelzusammensetzung | Beisp. 5 | Beisp. 6 | Beisp. 7 | Beisp. 8 | Vergleichsversuche | |
|---|---|---|---|---|---|---|
| | | | | | V3 | V4 |
| GTS [Gew.-%] | 40 | 40 | 45 | 45 | 73 | 73 |
| HCO [Gew.-%] | 40 | 40 | 40 | 40 | 0 | 0 |
| Zinkstearat [Gew.-%] | 10 | 10 | 5 | 5 | 9 | 9 |
| Silikat [Gew.%] | 0 | 0 | 0 | 0 | 4 | 4 |
| GMS [Gew.-%] | 10 | 10 | 10 | 10 | 14 | 14 |
| Beschichtungsmittelmenge [Gew.-%] | 0,5 | 0,5 | 0,5 | 0,5 | 0,5 | 0,5 |
| | | | | | | |
| Formteil | | | | | | |
| Bedampfungsdruck [bar] | 0,6 | 1,0 | 0,6 | 1,0 | 0,6 | 1,0 |
| Dichte [g/l] | 17,2 | 17,0 | 18,7 | 18,3 | 17,5 | 17,0 |
| Druckfestigkeit [kPa] | 97,5 | 84,9 | 108 | 95 | 99 | 83,6 |
| Biegefestigkeit [kPa] | 215 | 204 | 237 | 223 | 211 | 196 |
| Entformzeit [sec] | 68 | 145 | 97 | 147 | 27 | 133 |
| Schüttdichte nach 1. Schäumgang [g/l] | 17,1 | 17,1 | 17,5 | 17,5 | 17,0 | 17,0 |

### Beispiele 9 bis 11

### Beschichtungsmittelzusammensetzung:

Hydriertes Rizinusöl (HCO, Smp. = 87°C, (HCO Powder, Firma Jayant Oil and derivatives Ltd.) wurde mit Silikat (SIPERNAT FK320®), Glycerinmonostearat (GMS, GMSR, Fa. Danisco) und Glycerintristearat (GTS, Tegin BI159V Fa. Goldschmitt) sowie Zinkstearat zu einem einheitlichen Pulver entsprechend den in Tabelle 3 angegebenen Mischungsverhältnissen vermischt.

Die Beschichtungen wurden im Lödige Mischer (2,5 kg) auf die mit Antistatikum 743 (Fa. BASF SE) (150 ppm) vorbeschichtete expandierbare Polystyrol-Perlen (Styropor® P426 der BASF SEt) aufgebracht. Die Menge des Beschichtungsmittels, bezogen auf die beschichtete, expandierbare Polystyrol-Perle, ist ebenfalls in Tabelle 3 angegeben. Die beschichteten EPS-Perlen wurden im Vorschäumer vorgeschäumt und in einer Form zu Blöcken mit einer Dichte von 24 g/l versintert.

Die Druckfestigkeit wurde bei 10 % Stauchung nach EN 826, die Biegefestigkeit nach EN12039 Methode B bestimmt.

### Vergleichsversuche V3 und V4:

Hier wurden übliche Beschichtungen ohne hydriertes Rizinusöl eingesetzt.

**Tabelle 3**

| Beschichtungsmittelzusammensetzung | Beisp. 9 | Beisp. 10 | Beisp. 11 | Vergleichsversuche | | |
|---|---|---|---|---|---|---|
| | | | | V5 | V6 | V7 |
| GTS [Gew.-%] | 35 | 35 | 35 | 60 | 60 | 60 |
| HCO [Gew.-%] | 45 | 45 | 45 | 0 | 0 | 0 |
| Silikat [Gew.-%] | 15 | 15 | 15 | 10 | 10 | 10 |
| GMS [Gew.-%] | 5 | 5 | 5 | 30 | 30 | 30 |
| Beschichtungsmenge [Gew.-%] | 0,35 | 0,35 | 0,35 | 0,35 | 0,35 | 0,35 |
| | | | | | | |
| Formteil | | | | | | |
| Bedampfungsdruck [bar] | 0,8 | 1,0 | 1,2 | 0,8 | 1,0 | 1,2 |
| Dichte [g/l] | 23,5 | 23,5 | 23,5 | 22,3 | 22,5 | 22,5 |
| Druckfestigkeit [kPa] | 162 | 154 | 146 | 154 | 138 | 133 |
| Biegefestigkeit [kPa] | 793 | 805 | 785 | 715 | 744 | 734 |
| Entformzeit [sec] | 27 | 115 | 146 | 21 | 113 | 130 |

## Patentansprüche

1. Beschichtungsmittelzusammensetzung für expandierbare Styrolpolymerisatpartikel, enthaltend
(A) 10 bis 90 Gew.-% eines Tristearylesters mit einem Schmelzpunkt im Bereich von 60 bis 65°C,
(B) 10 bis 90 Gew.-% eines Tricglycerides einer Hydroxy-C₁₆ bis C₁₈-Ölsäure mit einem Schmelzpunkt im Bereich von 70 bis 95°C.

2. Beschichtungsmittelzusammensetzung für expandierbare Styrolpolymerisatpartikel nach Anspruch 1, **dadurch gekennzeichnet, dass** sie im wesentlichen aus
(A) 20 bis 80 Gew.-% eines Tristearylesters mit einem Schmelzpunkt im Bereich von 60 bis 65°C,
(B) 15 bis 50 Gew.-% eines Tricglycerides einer Hydroxy-C₁₆ bis C₁₈-Ölsäure mit einem Schmelzpunkt im Bereich von 70 bis 95°C,
(C) 5 bis 30 Gew.-% eines hydrophilen oder hydrophoben Silikates,
(D) 0 bis 40 Gew.-% eines Glycerinmonoesters einer C₁₆-C₁₈-Fettsäure,
(E) 0 bis 10 Gew.% eines quaternären Ammoniumslazes, Sulfoniumsalzes oder Ethylenbisstearyldiamides
besteht, wobei die Summe der Komponenten (A) bis (E) 100 Gew.-% ergibt.

3. Beschichtungsmittelzusammensetzung für expandierbare Styrolpolymerisatpartikel nach Anspruch 1 oder 2, **dadurch gekennzeichnet, dass** als Tristearylester (A) Glycerintristearat (GTS) oder Zitronensäure-tristearylester (CTS) eingesetzt wird.

4. Beschichtungsmittelzusammensetzung für expandierbare Styrolpolymerisatpartikel nach Anspruch 1 oder 2, **dadurch gekennzeichnet, dass** als Tricglycerid einer Hydroxy-C₁₆ bis C₁₈-Ölsäure (B) hydriertes Ricinusöl (HCO) eingesetzt wird.

5. Expandierbare Styrolpolymerisatpartikel, enthaltend mindestens eine Beschichtung, welche eine Beschichtungsmittelzusammensetzung gemäß einem der Ansprüche 1 bis 4 aufweist.

6. Expandierbare Styrolpolymerisatpartikel, nach Anspruch 5, welches
(I) eine erste Beschichtung aus 0,1 bis 2 Gew.-%, bezogen auf das expandierbare Styrolpolymerisat, mindestens einer Verbindung aus der Gruppe, enthaltend Glycerinmonostearat, Glycerindistearat, Zinkstearat, quarternäre Ammoniumsalze, Sulfoniumsalze und Ethylenbisdiaminde, und
(II) eine zweite Beschichtung aus 0,1 bis 2 Gew.-%, bezogen auf das expandierbare Styrolpolymerisat, einer Beschichtungszusammensetzung gemäß einem der Ansprüche 1 bis 3,
aufweist.

## Claims

1. A coating-composition formulation for expandable particulate styrene polymer, comprising
(A) from 10 to 90% by weight of a tristearyl ester whose melting point is in the range from 60 to 65°C,
(B) from 10 to 90% by weight of a triglyceride of a hydroxy-C₁₆-C₁₈ oleic acid whose melting point is in the range from 70 to 95°C.

2. The coating-composition formulation for expandable particulate styrene polymer, according to claim 1, which is essentially composed of
(A) from 20 to 80% by weight of a tristearyl ester whose melting point is in the range from 60 to 65°C,
(B) from 15 to 50% by weight of a triglyceride of a hydroxy-C₁₆-C₁₈ fatty acid whose melting point is in the range from 70 to 95°C,
(C) from 5 to 30% by weight of a hydrophilic or hydrophobic silicate,
(D) from 0 to 40% by weight of a glycerol monoester of a C₁₆-C₁₈ fatty acid,
(E) from 0 to 10% by weight of a quaternary ammonium salt, sulfonium salt or ethylenebisstearyldiamide,
the entirety of components (A) to (E) being 100% by weight.

3. The coating-composition formulation for expandable particulate styrene polymer, according to claim 1 or 2, wherein glycerol tristearate (GTS) or tristearyl citrate (CTS) is used as tristearyl ester (A).

4. The coating-composition formulation for expandable particulate styrene polymer, according to claim 1 or 2, wherein hydrogenated castor oil (HCO) is used as triglyceride of a hydroxy-C₁₆-C₁₈ oleic acid (B).

5. An expandable particulate styrene polymer, comprising at least one coating which has a coating-composition formulation according to any of claims 1 to 4.

6. The expandable particulate styrene polymer according to claim 5, which has
(I) a first coating composed of from 0.1 to 2% by weight, based on the expandable styrene polymer, of at least one compound from the group comprising glycerol monostearate, glycerol distearate, zinc stearate, quaternary ammonium salts, sulfonium salts, and ethylenebisdiamides, and
(II) a second coating composed of from 0.1 to 2% by weight, based on the expandable styrene polymer, of a coating formulation according to any of claims 1 to 3.

## Revendications

1. Composition d'agent d'enrobage pour particules de polymérisat de styrène expansibles, contenant
(A) 10 à 90 % en poids d'un ester tristéarylique ayant un point de fusion dans la plage de 60 à 65 °C,
(B) 10 à 90 % en poids d'un triglycéride d'un acide hydroxyoléique en C₁₆-C₁₈ ayant un point de fusion dans la plage de 70 à 95 °C.

2. Composition d'agent d'enrobage pour particules de polymérisat de styrène expansibles selon la revendication 1, **caractérisée en ce qu'**elle est essentiellement constituée de
(A) 20 à 80 % en poids d'un ester tristéarylique ayant un point de fusion dans la plage de 60 à 65 °C,
(B) 15 à 50 % en poids d'un triglycéride d'un acide hydroxyoléique en C₁₆-C₁₈ ayant un point de fusion dans la plage de 70 à 95 °C,
(C) 5 à 30 % en poids d'un silicate hydrophile ou hydrophobe,
(D) 0 à 40 % en poids d'un monoester de glycérol d'un acide gras en C₁₆-C₁₈,
(E) 0 à 10 % en poids d'un sel d'ammonium quaternaire, sel de sulfonium ou éthylènebisstéaryldiamide,
la somme des composants (A) à (E) étant égale à 100 % en poids.

3. Composition d'agent d'enrobage pour particules de polymérisat de styrène expansibles selon la revendication 1 ou 2, **caractérisée en ce qu'**on utilise comme ester tristéarylique (A) le tristéarate de glycérol (GTS) ou le citrate de tristéaryle (CTS).

4. Composition d'agent d'enrobage pour particules de polymérisat de styrène expansibles selon la revendication 1 ou 2, **caractérisée en ce qu'**on utilise comme triglycéride un acide hydroxyoléique en C₁₆-C₁₈ (B) d'huile de ricine hydrogénée (HCO).

5. Particule de polymérisat de styrène expansible, comportant au moins un enrobage qui comporte une composition d'agent d'enrobage selon l'une quelconque des revendications 1 à 4.

6. Particule de polymérisat de styrène expansible, selon la revendication 5, qui comporte
(I) un premier enrobage constitué de 0,1 à 2 % en poids, par rapport au polymérisat de styrène expansible, d'au moins un composé choisi dans le groupe contenant le monostéarate de glycérol, le distéarate de glycérol, le stéarate de zinc, des sels d'ammonium quaternaire, des sels de sulfonium et des éthylènebisdiamides, et
(II) un deuxième enrobage constitué de 0,1 à 2 % en poids, par rapport au polymérisat de styrène expansible, d'une composition d'enrobage selon l'une quelconque des revendications 1 à 3.
